# EUROPÄISCHE PATENTSCHRIFT

(11) **EP 0 937 383 B1**
(45) Veröffentlichungstag und Bekanntmachung des Hinweises auf die Patenterteilung: **07.08.2002**
(21) Anmeldenummer: 99102959.6
(22) Anmeldetag: 13.02.1999
(51) Int. Cl.: A01D 78/10

(54) **Heuwerbungsmaschine**
Haymaking machine
Machine de fenaison

(30) Priorität: 23.02.1998 DE 19807571
(43) Veröffentlichungstag der Anmeldung: 25.08.1999
(73) Patentinhaber: Maschinenfabrik Bernard Krone GmbH, 48480 Spelle (DE)
(72) Erfinder: Krone, Bernard Dr.-Ing. E.h., 48480 Spelle (DE); Horstmann, Josef Dr.-Ing., 49479 Ibbenbüren (DE)

(56) Entgegenhaltungen:
- EP-A- 0 779 021
- EP-A- 0 806 133
- DE-A- 3 814 690
- DE-U- 8 807 054
- DE-U- 9 015 320
- DE-U- 9 302 771
- DE-U- 9 409 143
- DE-U- 29 716 391

## Beschreibung

Die Erfindung betrifft eine Heuwerbungsmaschine, insbesondere zum Schwaden von landwirtschaftlichem Halm- oder Blattgut, wie beispielsweise Heu, Stroh oder angewelktem Grüngut nach dem Oberbegriff des Anspruches 1. Derartige Heuwerbungsmaschinen sind bereits aus der Praxis in mehreren Ausführungen bekannt.

Eine in der DE 195 46 914 A1 offenbarte Heuwerbungsmaschine weist vier Kreiselrechen oder dgl. Rechelemente auf, die bezüglich der Fahrt- und Arbeitsrichtung beidseitig an einem mit Laufrädern versehenen Tragrahmen angeordnet sind. In der Arbeits- und Betriebsstellung sind die Kreiselrechen dabei gestaffelt zueinander ausgerichtet, wobei die vorderen Kreiselrechen den hinteren Kreiselrechen seitlich ausladend vorgeordnet sind. Für den Transport der Heuwerbungsmaschine auf der Straße werden die Kreiselrechen aus der in etwa horizontalen Arbeits- und Betriebsstellung in eine nahezu vertikale Transportstellung geschwenkt. Dabei ist es allerdings erforderlich, die Bodenfreiheit des Tragrahmens, an dem die Kreiselrechen schwenkbar angelenkt sind, auf ein Minimum zu beschränken, damit die für den Straßentransport vorgeschriebene maximale Transporthöhe nicht überschritten wird. Bei der geringen Bodenfreiheit ergibt sich beispielsweise beim Befahren eines unebenen Feldweges, daß der Tragrahmen der Heuwerbungsmaschine auf dem Boden aufsetzt und somit ein sicherer Transport der Heuwerbungsmaschine auf solchen Wegstrecken nicht mehr gewährleistet ist.

Eine weitere bereits bekannte Heuwerbungsmaschine nach der älteren DE 197 16 379 C1 weist ebenfalls vier in einer V-Anordnung ausgerichtete Kreiselrechen auf, die schwenkbar an einem Tragrahmen angebracht sind und aus einer in etwa horizontalen Arbeits- und Betriebsstellung in eine nahezu vertikale Transportstellung und zurück überführbar sind. Bei dieser Heuwerbungsmaschine wird bereits eine vorteilhafte Lösung aufgezeigt, wie bei der Überführung der Kreiselrechen aus der Arbeits- und Betriebsstellung in die Transportstellung die für den Straßentransport zulässige maximale Transporthöhe nicht überschritten wird.

Die DE 297 16 391 U1 offenbart eine weitere Heuwerbungsmaschine zum Schwaden von landwirtschaftlichem Halm- oder Blattgut. Sie weist Merkmale auf, wie sie in der älteren vorstehend beschriebenen DE 197 16 379 C1 bereits offenbart sind und ist deshalb aus konstruktiver und funktioneller Sicht mit dieser vergleichbar. Man versucht hierbei bereits die Bodenfreiheit dieser Heuwerbungsmaschine zumindest im Bereich zwischen den Laufrädern zu verbessern, indem der mit dem Tragrahmen verbundene und sich auf den Laufrädern abstützende Fahrwerksträger portalförmig ausgebildet ist. Das gekürzte Achsteil mit dem Achszapfen für die Laufräder ist jeweils unterhalb des Fahrwerksträgers angeordnet. Auch eine derartige Ausbildung eines Fahrwerksträgers zur besseren Bodenfreiheit des Tragrahmens der beschriebenen, insbesondere zum Schwaden von landwirtschaftlichem Halm- oder Blattgut ausgebildeten Heuwerbungsmaschine, reicht nicht aus, um beispielsweise notwendige Wendefahrten auf einem Vorgewende einer Feld- oder Wiesenfläche vorzunehmen, ohne daß hierbei auf dem Vorgewende bereits vorher mit der Heuwerbungsmaschine fertiggestellte Schwaden aus Halm- oder Blattgut, beim Überfahren mit der Heuwerbungsmaschine mit angehobenem Kreiselrechen, vom Tragrahmen oder diesem zuzuordnenden Teile teilweise zerstört werden.

Aus der EP 0 806 133 A1 ist eine Vielkreisel-Heumaschine bekannt, die insbesondere einen von einem Schlepper gezogenen und mit acht Zinkenkreiseln ausgestatteten Heuwender beschreibt. Ein aus einem Längs- und Querträger gebildetes Mittelfahrgestellt stützt sich auf einzeln an diesem gehalterte Transporträder zu jeder Zeit am Erdboden ab. Die Transporträder sind höhenverstellbar und befinden sich zusammen mit ihrer hydraulisch verstellbaren Halterung jeweils innerhalb und bereichsweise unterhalb des von den rotierenden Zinkenkreisel umschriebenen Raum. Dieser Raum wird durch das Ineinandergreifen von benachbarten Zinkenkreiseln noch erheblich gemindert. An dem Querträger des Mittelfahrgestells befinden sich jeweils links und rechts um Längsachsen verschwenkbare und quer zur Fahrtrichtung ausgerichtete innere und äußere Tragarme, an denen die restlichen Zinkenkreisel drehbar in Lagerstellen befestigt sind. Heuwender werden in der Praxis mit nebeneinander quer zur Fahrtrichtung ausgerichteten Zinkenkreiseln zum Zetten von landwirtschaftlichem Halm- oder Blattgut verwendet. Ihre Zinkenkreisel sind im Durchmesser etwa halb so groß als die Schwadkreisel bei Schwadmaschinen und greifen ferner noch seitlich ineinander. Es lassen sich deshalb nur relativ kleine und wenig belastbare Tast- und Transporträder unter den Zinkenkreisel montieren. Ebenfalls können benachbarte Trag- und Stützräder vom Mittelfahrgestell zur besseren Stabilität nicht durch eine Querachse miteinander verbunden werden, da die Zinken der Zinkenkreisel dann an die Querachse anschlagen würden. Das Mittelfahrgestell mit den Zinkenkreiseln muß bei der Überführung aus einer Arbeitsstellung, bei der die Zinken der Zinkenkreisel annähernd Bodenberührung haben, in eine Transportstellung für eine entsprechende Bodenfreiheit angehoben werden. Die Schwerpunktlage wird hierdurch negativ beeinflußt, und der Heuwender läßt sich in dieser Transportstellung nicht zum Zetten und Wenden von Halm- oder Blattgut verwenden.

Aufgabe der Erfindung ist es daher, eine Heuwerbungsmaschine, insbesondere zum Schwaden von landwirtschaftlichem Halm- oder Blattgut mit vier in einer V-Anordnung zueinander angeordneten und um vertikale Achsen umlaufenden Kreiselrechen, bereitzustellen, deren günstige Schwerpunktlage für die Standsicherheit sowohl in der Arbeits- und Betriebsstellung als auch in der Transportstellung vorhanden einsatzbedingt jedoch veränderbar ist.

Zur Lösung der gestellten Aufgabe zeichnet sich die Heuwerbungsmaschine der vorstehend genannten Art durch die im kennzeichnenden Teil des Anspruches 1 angegebenen Merkmale aus. Hinsichtlich der weiteren Ausgestaltung der Erfindung wird auf die Ansprüche 2 bis 11 verwiesen.

Durch die Erfindung wird eine einfache und kostengünstig herstellbare Lösung aufgezeigt, den Tragrahmen einer Heuwerbungsmaschine für eine große Standsicherheit der Heuwerbungsmaschine sowohl in der Arbeits- und Betriebsstellung als auch in der Transportstellung gegenüber bekannten Heuwerbungsmaschinen zum Schwaden von landwirtschaftlichem Halm- oder Blattgut möglichst niedrig bzw. möglichst bodennah zur Erreichung eines möglichst niedrig zum Erdboden gehaltenen Schwerpunktes anzuordnen und dennoch einsatzbedingt bzw. unter speziellen Einsatzfällen den Tragrahmen und damit einen Teil oder die gesamte Heuwerbungsmaschine in eine höher zum Erdboden oder zu einem Hindernis gelegenen Hilfestellung zu verändern. Letztere Hilfestellung wird durch Ansteuerung wenigstens eines Stellgliedes durch den Bediener beispielsweise durch den Schlepperfahrer erreicht.

Bei der Heuwerbungsmaschine handelt es sich um eine Ausführungsform mit vier in einer V-Anordnung zueinander angeordneten Kreiselrechen, die sich in der Arbeits- und Betriebsstellung über eigene Stützräder gegenüber dem Erdboden abstützen. Die insbesondere als Schwadmaschine ausgebildete Heuwerbungsmaschine bearbeitet in einem Arbeitsgang einen durchgehenden Feldstreifen mit großer Breite. Der Tragrahmen, an dem die Kreiselrechen gehaltert sind, stützt sich über ein eigenes Fahrwerk mit Laufrädern auf dem Erdboden ab. Durch die erfindungsgemäße Ausbildung des Fahrwerkes hebt ein dem Fahrwerk zugeordnetes Stellglied den Tragrahmen gegenüber den sich auf dem Erdboden abstützenden Laufrädern an. Gleichzeitig oder vom Zeitrang her nach- oder vorgeordnet werden auch über weitere Stellglieder die am Tragrahmen gehalterten bzw. angelenkten Kreiselrechen angehoben, so daß insgesamt eine größere Bodenfreiheit beim Befahren unebener Feldwege erreichbar ist.

Eine vorteilhafte Ausführungsform der Erfindung geht davon aus, daß die Laufräder, mit dem Fahrwerk auf denen sich der Tragrahmen der Heuwerbungsmaschine gegenüber dem Erdboden abstützt, bezüglich der Fahrt- und Arbeitsrichtung zwischen den vorderen und hinteren Kreiselrechen angeordnet sind. Dabei ist es vorgesehen, daß die Laufräder über schwenkbeweglich am Tragrahmen gelagerte Tragarme am Tragrahmen angebracht sind, so daß mittels hydraulischer Kolben-Zylinder-Anordnungen oder dgl. Stellglieder eine Veränderung der Bodenfreiheit durchführbar ist. Nach der Erfindung ist aber auch denkbar, die Laufräder in Fahrt- und Arbeitsrichtung gesehen hinter den hinteren Kreiselrechen der Heuwerbungsmaschine anzubringen.

Eine Ausführungsform gemäß Anspruch 10 dient dem Schnellanheben sowohl der Kreiselrechen als auch des Tragrahmens auf eine Bodenfreiheit, bei der beispielsweise bei Wendefahrten auf dem Vorgewende bereits fertiggestellte Erntegutschwaden nicht beschädigt oder zerstört werden. Durch diese Art der Betätigung lassen sich in vorteilhafter Weise die Verweilzeiten auf dem Vorgewende auf ein Minimum reduzieren.

Ein weiterer vorteilhafter Aspekt der Erfindung siehvor, die Ansteuerung der hydraulischen Kolben-Zylinder-Anordnungen der Tragarme der Laufräder mit der Ansteuerung von hydraulischen Kolben-Zylinder-Anordnungen zur Überführung der hinteren Kreiselrechen aus der Arbeits- und Betriebsstellung in die Transportstellung und zurück zu koppeln, so daß sich daraus eine einfache Bedienung der Heuwerbungsmaschine ergibt. Ebenso ist es aber auch vorstellbar, sowohl die hydraulischen Kolben-Zylinder-Anordnungen für die vorderen und für die hinteren Kreiselrechen als auch die hydraulischen Kolben-Zylinder-Anordnungen für die Tragarme der Laufräder unabhängig voneinander anzusteuern.

Eine detaillierte Beschreibung des Gegenstandes der Erfindung erfolgt nun anhand eines Ausführungsbeispieles. In der Zeichnung stellt im einzelnen dar:
- Fig.1: eine Draufsicht einer erfindungsgemäßen Heuwerbungsmaschine in einer Arbeits- und Betriebsstellung;
- Fig.2: eine Seitenansicht der Heuwerbungsmaschine mit in eine Transportstellung geschwenkten Kreiselrechen;
- Fig.3: eine vergrößerte, teilweise abgebrochene Darstellung der Einzelheit X in Fig.2 mit einem ebenfalls teilweise abgebrochen dargestellten Laufrad;
- Fig.4: eine teilweise abgebrochen dargestellte Draufsicht der Heuwerbungsmaschine gemäß Fig.3;

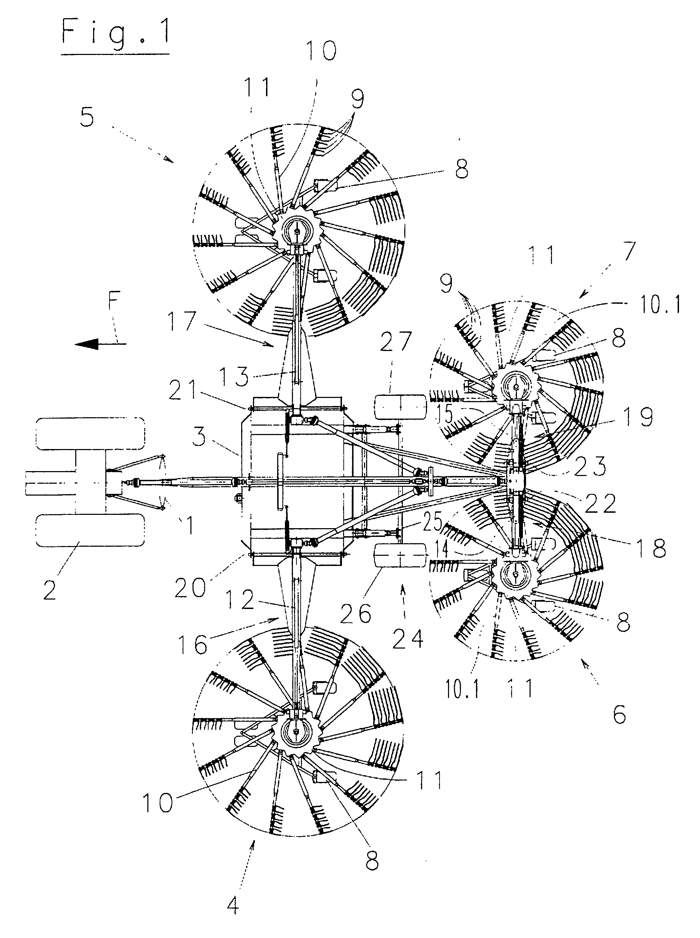

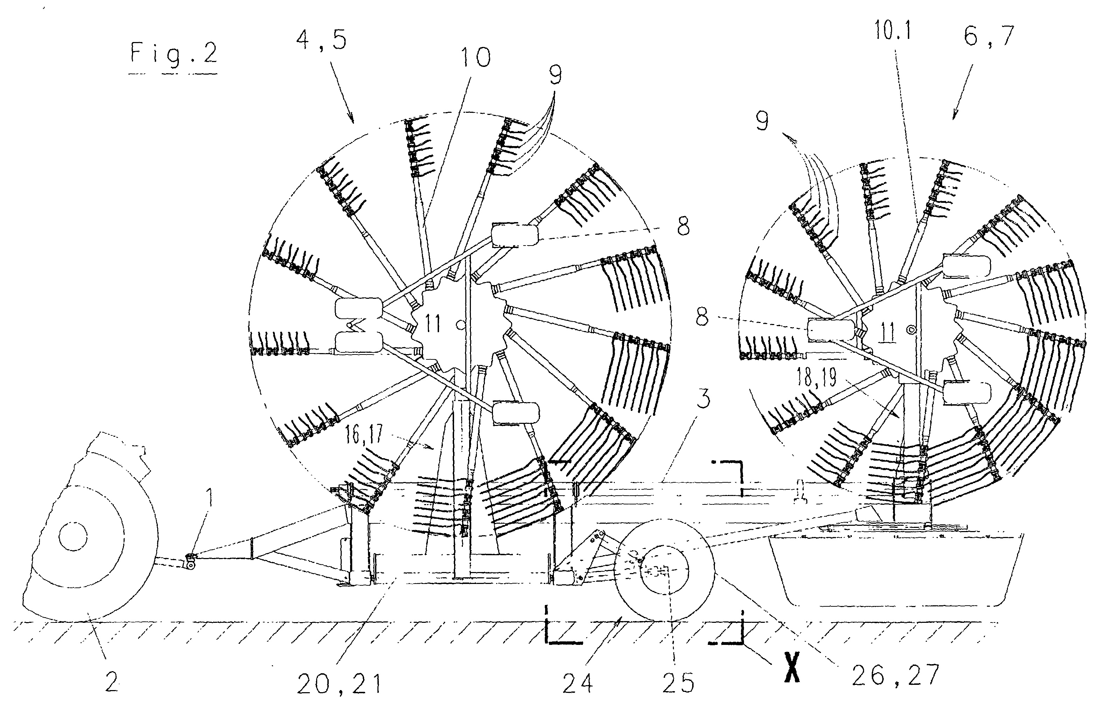

Aus den Figuren 1 und 2 ist der Grundaufbau einer erfindungsgemäßen Heuwerbungsmaschine ersichtlich, die über einen Anbaubock 1 an einem landwirtschaftlichen Zugfahrzeug 2 angekuppelt ist. An den Anbaubock 1 schließt sich ein Tragrahmen 3 an, der um eine vertikale Achse schwenkbar mit dem Anbaubock 1 verbunden ist. Desweiteren umfaßt die Heuwerbungsmaschine vordere Kreiselrechen 4,5 und hintere Kreiselrechen 6,7, die dem Tragrahmen 3 in einer V-förmigen Anordnung zugeordnet sind und sich in der Arbeits- und Betriebsstellung über Stützrädern 8 gegenüber dem Erdboden abstützen, welche sich selbsttätig der Fahrt- und Arbeitsrichtung F der Heuwerbungsmaschine anpassen. Die Kreiselrechen 4,5,6,7 ihrerseits weisen mit Zinken 9 bestückte Zinkenarme 10,10.1 auf, die innerhalb von Kreiselgehäusen 11 gelagert sind und von nicht näher dargestellten Steuerkurven innerhalb der Kreiselgehäuse 11 steuerbar sind. Über hydraulische Kolben-Zylinder-Anordnungen 12,13,14,15 oder dgl. Stellglieder können die an Kreiseltragarmen 16,17,18,19 gehalterten Kreiselrechen 4,5,6,7 durch eine Schwenkbewegung um in Fahrt- und Arbeitsrichtung F gerichtete Schwenkachsen 20,21,22,23 aus einer in etwa horizontalen Arbeits- und Betriebsstellung (Fig.1) in eine nahezu vertikale Transportstellung (Fig.2) und zurück überführt werden. Die Drehrichtungen der Kreiselrechen 4,5,6,7 sind im dargestellten Ausführungsbeispiel so gerichtet, daß mittig hinter den hinteren inneren Kreiselrechen 6,7 ein Schwad abgelegt werden kann.

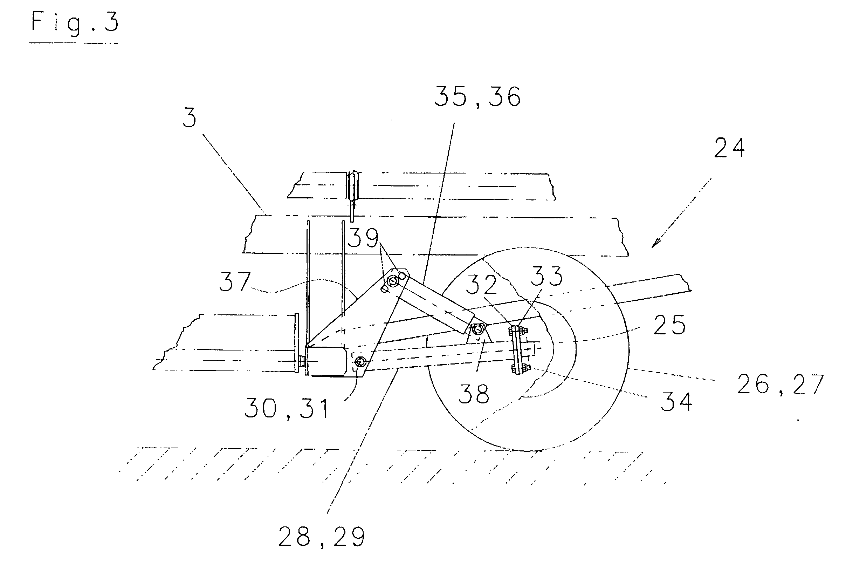

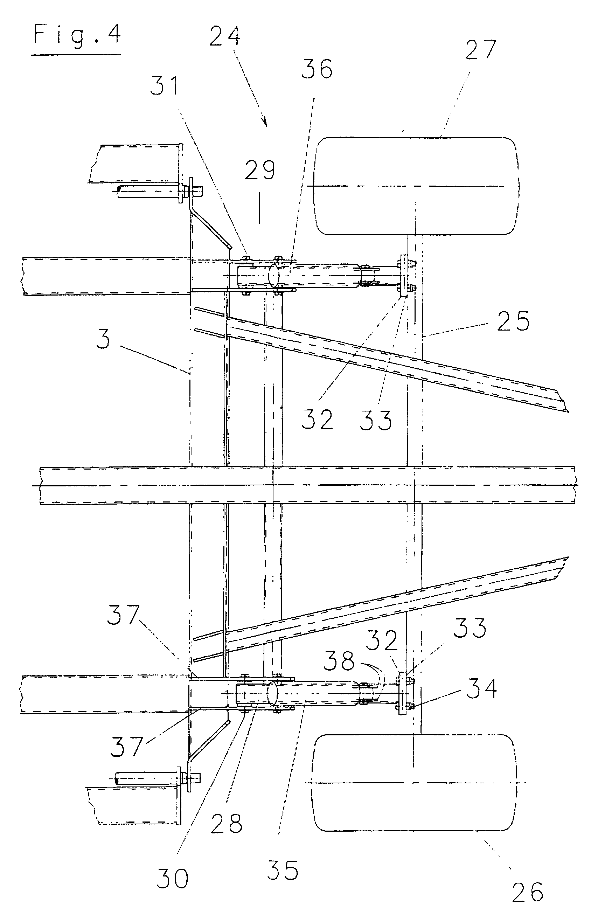

Wie aus den Figuren 3 und 4 hervorgeht, stützt sich der Tragrahmen 3 der Heuwerbungsmaschine über ein Fahrwerk 24 gegenüber dem Erdboden ab, welches im wesentlichen aus einer Achse 25 besteht, an der Laufräder 26,27 gelagert sind. Zur höhenveränderlichen Anbringung der Achse 25 am Tragrahmen 3 sind Tragarme 28,29 vorgesehen, die um quer zur Fahrt- und Arbeitsrichtung F gerichtete Achsen 30,31 am Tragrahmen 3 schwenkbar gelagert sind und über Anschweißplatten 32,33 und Schraubverbindungen 34 mit der Achse 25 fest verbunden sind. Zur Veränderung der Bodenfreiheit des Tragrahmens 3 sind hydraulische Kolben-Zylinder-Anordnungen 35,36 vorgesehen, welche sich zwischen Halterungen 37 des Tragrahmens 3 und Aufnahmelaschen 38 der Tragarme 28,29 erstrecken. Zur Veränderung der minimalen Bodenfreiheit (Kolben-Zylinder-Anordnungen 35,36 sind drucklos und der Tragrahmen 3 ist gegenüber dem Erdboden abgestützt) weisen die Halterungen 37 mehrere Bohrungen 39 zur Aufnahme der hydraulischen Kolben-Zylinder-Anordnungen 35,36 auf.

In einer Weiterbildung der Erfindung können die hydraulischen Kolben-Zylinder-Anordnungen 12,13,14,15 der Kreiselrechen 4,5,6,7 und die hydraulischen Kolben-Zylinder-Anordnungen 35,36 der Tragarme 28,29 entweder gleichzeitig und voneinander abhängig oder unabhängig voneinander von einer hydraulischen Druckquelle mit Druckmittel versorgt werden. Bei der Versorgung der hydraulischen Kolben-Zylinder-Anordnungen 35,36 kann es erforderlich sein, daß in den Zuleitungen ein Mengenteiler eingesetzt ist und somit die zu den hydraulischen Kolben-Zylinder-Anordnungen 35,36 fließenden Druckmittelmengen gleich groß sind.

Gemäß einem weiteren Aspekt der Erfindung ist es denkbar, das im dargestellten Ausführungsbeispiel bezüglich der Fahrt- und Arbeitsrichtung F zwischen den vorderen Kreiselrechen 4,5 und den hinteren Kreiselrechen 6,7 angeordnete Fahrwerk 24 auch hinter den hinteren Kreiselrechen 6,7 am Tragrahmen 3 anzubringen.

Obwohl eine bevorzugte Ausführungsform in der Zeichnung und der dazugehörenden Beschreibung beschrieben wurde, sind weitere Modifikationen und Ausführungen denkbar. So ist es beispielsweise ebenfalls möglich, das Fahrwerk 24 lenkbar auszubilden, um dadurch ein besseres Nachlaufverhalten der Heuwerbungsmaschine zu erreichen.

## Patentansprüche

1. Heuwerbungsmaschine, insbesondere zum Schwaden von landwirtschaftlichem Halm- oder Blattgut mit vier um vertikale Achsen umlaufenden, sich über Stützräder (8) gegenüber dem Erdboden abstützenden und mit Zinken (9) bestückte und gesteuerte Zinkenarme (10,10.1) aufweisenden Kreiselrechen (4,5,6,7) oder dgl. Rechelemente, welche bezüglich der Fahrt- und Arbeitsrichtung (F) beidseitig an einem mit Laufrädern (26,27) versehenen Tragrahmen (3) angeordnet sind und über hydraulische Kolben-Zylinder-Anordnungen (12,13,14,15) aus einer in etwa horizontalen Arbeits- und Betriebsstellung in eine zumindest annähernd vertikale Transportstellung und zurück überführbar sind, **dadurch gekennzeichnet, daß** der Tragrahmen (3) unabhängig von Stützrädern (8) der Kreiselrechen (4,5,6,7) mit Hilfe eines Laufräder (26,27) aufweisenden Fahrwerkes (24) aus einer eine Arbeits- und Betriebsstellung (Fig. 1) als auch eine Transportstellung (Fig. 2) definierende, eine große Standsicherheit der Heuwerbungsmaschine durch minimale Bodenfreiheit aufweisende Grundstellung in eine eine größere Bodenfreiheit aufweisende Hilfestellung überführbar ist.

2. Heuwerbungsmaschine nach Anspruch 1, **dadurch gekennzeichnet, daß** die Laufräder (26,27) des Fahrwerkes (24) an einer sie verbindenden gemeinsamen Achse (25) gelagert sind und die Achse (25) Teil des Fahrwerkes (24) ist, auf dem sich der Tragrahmen (3) zum Erdboden höhenveränderlich abstützt.

3. Heuwerbungsmaschine nach Anspruch 1 und 2, **dadurch gekennzeichnet, daß** das Fahrwerk (24) bezüglich der Fahrt- und Arbeitsrichtung (F) zwischen den vorderen Kreiselrechen (4,5) und den hinteren Kreiselrechen (6,7) angeordnet ist.

4. Heuwerbungsmaschine nach einem der Ansprüche 1 bis 3, **dadurch gekennzeichnet, daß** das Fahrwerk (24) in Fahrtrichtung (F) gesehen hinter den hinteren Kreiselrechen (6,7) am Tragrahmen (3) angebracht ist.

5. Heuwerbungsmaschine nach einem der Ansprüche 1 bis 4, **dadurch gekennzeichnet, daß** die Laufräder (26,27) des Fahrwerkes (24)lenkbar ausgebildet sind.

6. Heuwerbungsmaschine nach einem der Ansprüche 1 bis 5, **dadurch gekennzeichnet, daß** das Fahrwerk (24) einerseits schwenkbar mit dem Tragrahmen (3) und andererseits mit der Achse (25) verbundene Tragarme (28,29) aufweist.

7. Heuwerbungsmaschine nach Anspruch 6, **dadurch gekennzeichnet, daß** sowohl die Abstützung als auch die Schwenkbewegung der Tragarme (28,29) des Fahrwerkes (24) gegenüber dem Tragrahmen (3) mittels hydraulischer Kolben-Zylinder-Anordnungen (35,36) oder dgl. Stellglieder erfolgt.

8. Heuwerbungsmaschine nach Anspruch 7, **dadurch gekennzeichnet, daß** für eine vorwählbare Grundeinstellung des Tragrahmens (3) zum Erdboden die Halterungen (37) des Tragrahmens (3) und/oder die Aufnahmelaschen (38) der Tragarme (28, 29) mehrere Bohrungen (39) zur Aufnahme der hydraulischen Kolben-Zylinder-Anordnungen (35, 36) od. dgl. Stellglieder aufweisen.

9. Heuwerbungsmaschine nach einem der Ansprüche 1 bis 8, **dadurch gekennzeichnet, daß** eine Ansteuerung der hydraulischen Kolben-Zylinder-Anordnungen (12,13,14,15) der Kreiselrechen (4,5,6,7) und der hydraulischen Kolben-Zylinder-Anordnungen (35,36) unabhängig voneinander erfolgt.

10. Heuwerbungsmaschine nach einem der Ansprüche 1 bis 9, **dadurch gekennzeichnet, daß** die hydraulischen Kolben-Zylinder-Anordnungen (12,13,14,15) der Kreiselrechen (4,5,6,7) und die hydraulischen Kolben-Zylinder-Anordnungen (35,36) des Fahrwerkes (24) gleichzeitig mit Druckmittel beaufschlagbar sind.

11. Heuwerbungsmaschine nach einem der Ansprüche 1 bis 10, **dadurch gekennzeichnet, daß** die hydraulischen Kolben-Zylinder-Anordnungen (14,15) der hinteren Kreiselrechen (6,7) und die hydraulischen Kolben-Zylinder-Anordnungen (35,36) des Fahrwerkes 24 gleichzeitig und voneinander abhängig ansteuerbar sind.

## Claims

1. Haymaking machine, particularly for swathing agricultural stalky or leafy material, with four rotary rakes (4, 5, 6, 7) or similar rake elements, rotating about vertical axes, supported on the ground by supporting wheels (8) and fitted with controlled tine arms (10, 10.1) fitted with tines (9), which with regard to the travelling and working direction (F) are arranged on both sides of a mounting frame (3) fitted with running wheels (26, 27) and which by means of hydraulic piston-cylinder arrangements (12, 13, 14, 15) can be moved from an approximately-horizontal working and operating position into an almost vertical transport position and back, **characterised in that** the mounting frame (3), independent of supporting wheels (8) of the rotary rakes (4, 5, 6, 7), with the aid of a running gear (24) fitted with running wheels (26, 27), can be moved from a working and operating position (Fig. 1) and also from a basic position representing the transport position (Fig. 2) which provides great stability to the haymaking machine due to a minimum ground clearance, to an auxiliary position with a large ground clearance.

2. Haymaking machine according to claim 1, **characterised in that** the running wheels (26, 27) of the running gear (24) are mounted on a connecting common axle (25) and that the axle (25) is part of the running gear (24) on which the mounting frame (3) is supported and its height can be adjusted relative to the ground.

3. Haymaking machine according to claims 1 and 2, **characterised in that** the running gear (24) with regard to the travelling and working direction (F) is arranged between the front rotary rakes (4, 5) and rear rotary rakes (6, 7).

4. Haymaking machine according to one of claims 1 to 3, **characterised in that** the running gear (24) is mounted on the mounting frame (3) behind the rear rotary rakes (6, 7), viewed in the direction of travel (F).

5. Haymaking machine according to one of claims 1 to 4, **characterised in that** the running wheels (26, 27) of the running gear (24) are of steerable design.

6. Haymaking machine according to one of claims 1 to 5, **characterised in that** the running gear (24) is fitted with carrying arms (28, 29) that are on the one hand swivel-mounted on the mounting frame (3) and on the other hand connected to the axle (25).

7. Haymaking machine according to claim 6, **characterised in that** both the support and swivel movement of the carrying arms (28, 29) of the running gear (24) relative the mounting frame (3) are achieved by means of hydraulic piston-cylinder arrangements (35, 36) or similar actuators.

8. Haymaking machine according to claim 7, **characterised in that** for a pre-settable basic setting of the mounting frame (3) relative to the ground, the mounting brackets (37) of the mounting frame (3) and/or the mounting brackets (38) of the supporting arms (28, 29) have several holes (39) to take the hydraulic piston-cylinder arrangements (35, 36) or similar actuators.

9. Haymaking machine according to one of claims 1 to 8, **characterised in that** the hydraulic piston-cylinder arrangements (12, 13, 14, 15) of the rotary rakes (4, 5, 6, 7) and the hydraulic piston-cylinder arrangements (35, 36) are controlled independent of each other.

10. Haymaking machine according to one of claims 1 to 9, **characterised in that** a pressurising means can be simultaneously applied to the hydraulic piston-cylinder arrangements (12, 13, 14, 15) of the rotary rakes (4, 5, 6, 7) and the hydraulic piston-cylinder arrangements (35, 36) of the running gear (24).

11. Haymaking machine according to one of claims 1 to 10, **characterised in that** the hydraulic piston-cylinder arrangements (14, 15) of the rear rotary rakes (6, 7) and the hydraulic piston-cylinder arrangements (35, 36) of the running gear (24) can be controlled simultaneously and independent of each other.

## Revendications

1. Machine pour la récolte du foin, notamment pour former des andains de produits agricoles en forme de tiges ou de feuilles, comportant quatre rotors de râtelage (4, 5, 6, 7) tournant autour d'axes verticaux, s'appuyant sur le sol par des roues d'appui (8) et ayant des bras (10, 10.1) commandés et garnis de dents (9) ou des éléments de râtelage, et qui sont portés par des bras de support (3) situés de part et d'autre d'un châssis (3) muni de roues de roulement (26, 27), selon la direction de déplacement et de travail (F), en pouvant être commandé par un dispositif à vérin hydraulique (12, 13, 14, 15) d'une position de fonctionnement et de travail, sensiblement horizontale vers une position de transport sensiblement verticale et inversement,
**caractérisé en ce qu'**
indépendamment des roues d'appui (8) des rotors de râtelage (4, 5, 6, 7), le châssis (3) muni d'un mécanisme de roulement (24) comportant des roues de roulement (26, 27) peut passer d'une position de fonctionnement et de travail (figure 1) ou d'une position de base définissant une position de transport (figure 2) ayant une garde au sol minimale pour donner à la machine une grande sécurité d'appui, vers une position auxiliaire ayant un plus grand dégagement au sol.

2. Machine selon la revendication 1,
**caractérisée en ce que**
les roues de roulement (26, 27) du mécanisme de roulement (24) sont montées sur un axe commun (25) qui les relie et cet axe (25) fait partie du mécanisme de roulement (24) sur lequel s'appuie le bras de support (3) de manière réglable en hauteur par rapport au sol.

3. Machine selon l'une quelconque des revendications 1 et 2,
**caractérisée en ce que**
le mécanisme de roulement (24) est prévu entre les rotors de râtelage (4, 5) avant et les rotors de râtelage arrière (6, 7) selon le sens de déplacement et de travail (F).

4. Machine selon l'une quelconque des revendications 1 à 3,
**caractérisée en ce que**
le mécanisme de roulement (24) est monté sur le châssis (3) derrière les rotors de râtelage arrière (6, 7) dans la direction de déplacement (F).

5. Machine selon l'une quelconque des revendications 1 à 4,
**caractérisée en ce que**
les roues de roulement (26, 27) du mécanisme de roulement (24) sont directrices.

6. Machine selon l'une quelconque des revendications 1 à 5,
**caractérisée en ce que**
le mécanisme de roulement (24) comporte des bras de support (28, 29) reliés de manière pivotante au châssis (3) et à l'axe (25).

7. Machine selon la revendication 6,
**caractérisée en ce qu'**
à la fois l'appui et le mouvement de basculement des bras de support (28, 29) du mécanisme de roulement (24) par rapport au châssis (3) se fait à l'aide de vérins hydrauliques (35, 36) ou d'actionneurs de ce type.

8. Machine selon la revendication 7,
**caractérisée en ce que**
pour un réglage de base présélectionné du châssis (3) par rapport au sol, les fixations (37) du châssis de support (3) et/ou les pattes de réception (38) des bras de support (28, 29) comportent plusieurs perçages (39) pour recevoir les dispositifs à vérin hydraulique (35, 36) ou actionneurs de ce type.

9. Machine selon l'une quelconque des revendications 1 à 8,
**caractérisée en ce que**
la commande des vérins hydrauliques (12, 13, 14, 15) des rotors de râtelage (4, 5, 6, 7) et la commande des vérins hydrauliques (35, 36) se font de manière indépendante.

10. Machine selon l'une quelconque des revendications 1 à 9,
**caractérisée en ce que**
les vérins hydrauliques (12, 13, 14, 15) des rotors de râtelage (4, 5, 6) et les vérins hydrauliques (35, 36) du mécanisme de roulement (24) reçoivent du fluide sous pression simultanément.

11. Machine selon l'une quelconque des revendications 1 à 10,
**caractérisée en ce que**
les vérins hydrauliques (14, 15) des rotors de râtelage arrière (6, 7) et les vérins hydrauliques (35, 36) du mécanisme de roulement (24) peuvent être commandés simultanément et de manière indépendante les uns des autres.
